# EUROPEAN PATENT SPECIFICATION

(11) **EP 4 508 745 B1**
(45) Date of publication and mention of the grant of the patent: **03.12.2025**
(21) Application number: 23716868.7
(22) Date of filing: 04.04.2023
(51) Int. Cl.: H02M 7/00

(54) **HIGH EFFICIENT DIRECT MAINS SUPPLY FOR CONNECTED LED DRIVERS**
HOCHEFFIZIENTE DIREKTE NETZSPEISUNG FÜR ANGESCHLOSSENE LED-TREIBER
ALIMENTATION SECTEUR DIRECTE À HAUTE EFFICACITÉ POUR PILOTES DEL CONNECTÉS

(30) Priority: 14.04.2022 EP 22168414
(43) Date of publication of application: 19.02.2025
(73) Proprietor: Signify Holding B.V., 5656 AE Eindhoven (NL)
(72) Inventor: KAHLMAN, Henricus, Marius, Joseph, Maria, 5656 AE Eindhoven (NL)
(74) Representative: Verweij, Petronella Daniëlle
(86) International application number: PCT/EP2023/058790
(87) International publication number: WO 2023/198520

(56) References cited:
- US-A1- 2011 013 437
- US-A1- 2021 410 250

## Description

### FIELD OF THE INVENTION

The invention relates to a power supply. The invention further relates to a luminating apparatus. The invention further relates to a method for controlling a power supply.

### BACKGROUND OF THE INVENTION

In connected direct mains LED driver applications, a separate low voltage power supply is needed to supply the controller and communication circuitry. The low voltage power supply is required to power the controller and communication circuitry continuously, regardless of whether the LED driver is operating or in stand-by. The communications always need to be able to listen to a remote sender and detect an activation signal for the LED driver. The required supplied power for the low voltage power supply is normally in the range of 50mW only, where the LEDs may be driven with a power typically of several Watts or even higher. The resulting standby power in the LED driver becomes a significant contribution to the stand-by losses of an LED driver or a luminating apparatus. Nowadays the poor efficiency is in the range of 20 to 30%.

Publication US2011013437A1 shows a power supply according to the preamble of claim 1.

### SUMMARY OF THE INVENTION

It is an objective of the invention to provide a power supply that has an improved efficiency.

To provide this power supply, in a first aspect of the invention, a power supply comprises:
a rectifier for receiving an alternating current, AC, input voltage and for providing a rectified voltage;
a switched mode power supply adapted to receive the rectified voltage and to provide a regulated output voltage to a load;
a first sensor for sensing the rectified voltage and to provide a first control signal;
a controller for controlling the switched mode power supply,
wherein the controller is arranged to enable and disable the switched mode power supply;
wherein the controller is arranged to enable the switched mode power supply when the first control signal is below a threshold level and disable the switched mode power supply when the first control signal is above the threshold level.

The power supply receives an alternating voltage. This alternating voltage may be a regular mains voltage, such as the well-known examples of 220 to 230 V at 50 Hz or 110 to 120 V at 60 Hz. This alternating voltage is rectified by a rectifier. The rectified voltage is provided to a switched mode power supply, which in its turn converts the rectified voltage into a regulated output voltage for a load. The rectified voltage is also provided to a first sensor. The first sensor senses the rectified voltage and provides a first control signal based on the sensed rectified voltage. A controller is used to control the switched mode power supply. The controller is used to enable and disable the switched mode power supply. The controller receives the first control signal and compares this first signal with a threshold level. If the first signal is below the threshold level, the controller enables the switched mode power supply. If the first signal is above the threshold level, the controller disables the switched mode power supply. This means that the switched mode power supply is enabled based on the rectified voltage being above or below a predefined value. The switched mode power supply may be powered by this rectified voltage when below the predefined value. The switched mode power supply may also be powered via another power source when the rectified voltage is above the predefined voltage.

In another example, the switched mode power supply is a self-oscillating switched mode power supply.

Preferably, the switched mode power supply is a self-oscillating switched mode power supply because this switched mode power supply can be enabled and disabled very fast.

The switched mode power supply is a buck converter or a flyback converter.

A buck converter may benefit most from this invention because the buck converter already provides a lower voltage, e.g. 3.3 V, while receiving only a low input voltage. This allows the ratio between the input voltage to output voltage to be kept close to 1.

In another example, the switched mode power supply comprises a second sensor for sensing the regulated output voltage and to generate a second control signal, wherein the controller is arranged for receiving the second control signal.

A second sensor may be used to sense the regulated output voltage. The second sensor provides a second control signal based on the sensed regulated output voltage. The controller receives this second control signal. Based on this second control signal, the threshold level may be determined. This could mean that a change in the regulated output voltage may result in a change in the threshold level. This could also mean that when the regulated output voltage drops, e.g. due to an increase in power consumption by the load, the threshold level may be increased. Additionally or alternatively, when the regulated output voltage increases, e.g. due to a decrease in power consumption by the load, the threshold level may be decreased.

In another example, the threshold level is based on a power required by the load, wherein the controller is arranged to:
increase the threshold level based on an increase of the power required by the load, and decrease the threshold level based on a decrease of the power required by the load.

Preferably, the threshold level can be varied. The threshold may be increased or decreased based on the amount of power required by the load. If the load power increases, the threshold level may be increased and when the load power decreases, the threshold level may be decreased. This may allow the switched mode power supply to operate in a single operating point, allowing the switched mode power supply to operate more efficiently over a range of power required by the load.

In another example, the controller is part of the load.

Preferably, the load is a low power consumption load. This low power consumption may for example occur when the power supply is in stand-by. When the power supply is in an active mode, the load may consume more power. The load may comprise the controller. The controller may also need more power during operating mode than during the stand-by mode.

In a second aspect, a luminating apparatus comprises:
the power supply according to any of the preceding examples;
a further power supply for providing power to a further load,
the load, and
the further load.

A luminating apparatus may have a power supply for powering components that require a low voltage and/or a low power. A further power supply may be used to power another load. This other load may have a power requirement that is much higher than the power requirement of the load powered by the power supply.

In a further example, the further load is a lighting load.

Preferably, the further load is a lighting load. The power supply provides power to the load and the further power supply provides power to the lighting load.

In a further example, the lighting load comprises a light emitting diode, LED.

Preferably, the lighting load is an LED load. An LED load is an effective light source.

In a further example, the controller comprises a wireless communication module arranged to receive a wireless signal, wherein the controller is arranged to enable or disable the further power supply based on the received wireless signal.

Preferably, the luminating apparatus is capable of receiving control signals form an external device. The luminating apparatus may therefore have a wireless communication module that allows the controller to receive control signal via the wireless communication module. The controller may then enable or disable the further power supply so that the luminating apparatus may be put in a stand-by mode or an active mode. In stand-by the controller does not need to control and/or power the further power supply. This means that the controller may need less power to operate.

In a further example, the further power supply comprises a further controller. The further power supply may have its own dedicated controller. This controller may also be powered by the power supply.

In a further example, the controller is arranged to control the switched mode power supply and the further power supply.

The controller may be used to control the switched mode power supply and the further power supply. The controller may then be a single control unit such as a microcontroller.

In third aspect, a method comprises:
using a rectifier for receiving an alternating current, AC, input voltage and for providing a rectified voltage;
using a first sensor for sensing the rectified voltage and for providing a first control signal;
using a controller for controlling a switched mode power supply for powering a load;
enabling the switched mode power supply when the first control signal is below a threshold level, and
disabling the switched mode power supply when the first control signal is above the threshold level.

Similar to the power supply as mentioned before, the method provides a way to control a switched mode power supply by disabling the switched mode power supply when a threshold level has been exceeded. The threshold level is a representation of the input voltage, which may be an alternating mains voltage.

In a further example, the method comprises:
increasing the threshold level when a power required by the load increases, and
decreasing the threshold level when the power required by the load decreases.

Preferably, the threshold level increases when the power required by the load increases. The threshold level may decrease when the power required by the load decreases.

### BRIEF DESCRIPTION OF THE DRAWINGS

Examples of the invention will now be described with reference to the accompanying drawings, in which:
Fig. 1 shows an example of a power supply.
Fig. 2 shows an example of a controller for controlling the power supply.
Fig. 3 shows a graph representing the operating window of the power supply.
Fig. 4 shows a graph representing a zoomed graph of the operating window of the power supply.
Fig. 5 shows an example of a luminating apparatus.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should also be understood that the Figures are merely schematic and are not drawn to scale. It should also be understood that the same reference numerals are used throughout the Figures to indicate the same or similar parts.

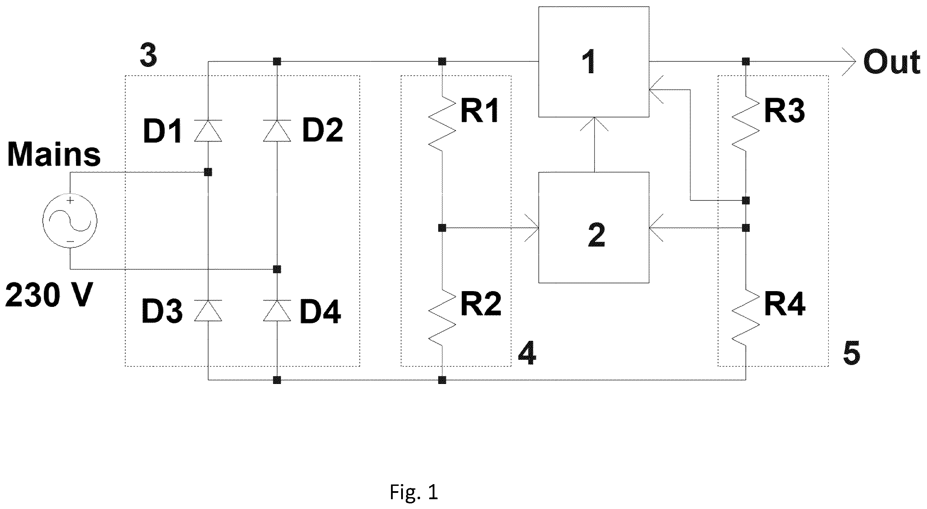

In Figure 1, an example of a power supply is shown. The power supply has a rectifier 3 that receives an AC voltage. Preferably, the AC voltage can be any AC voltage but is preferably a mains voltage of for example 230 V at 50 Hz or 120 V at 60 Hz. The rectifier 3 rectifies this AC voltage and provides a rectified voltage. The rectified voltage is provided to a switched mode power supply 1. The switched mode power supply 1 converts the rectified voltage into a regulated output voltage that can be used by a load. The rectified voltage is sensed by a first sensor 4. This first sensor 4 may be a voltage sensor that has a first resistor R1 and a second resistor R2. The rectified voltage is then reduced to a level that can be used by further circuitry. The first sensor 4 receives the rectified voltage and uses this rectified voltage to provide a first control signal. This first control signal is provided to a controller 2. The controller 2 may generate a threshold level that may be used as a reference level. The first control signal is compared to this threshold level. The threshold level is used to represent a voltage level of the rectified mains. This results in that the controller provides an indirect comparison of the rectified voltage with a voltage threshold level. If the first control level is below the threshold level, this may be interpreted that the rectified voltage is below a predefined value. The controller 2 may provide a control signal to control the switched mode power supply 1. The control signal is represented in Figure 1 as an arrow from the controller 2 to the switched mode power supply 1. When the first control level is below the threshold level, the controller 2 may enable the switched mode power supply 1. When the first control level is above the threshold level, the controller 2 may disable the switched mode power supply 1. The switched mode power supply 1 now receives a rectified voltage that is below a threshold level and provides a regulated output voltage to the load. The switched mode power supply 1 now also receives a voltage that is above the threshold level but does not provide a regulated output voltage to the load. In other words, the threshold level is used to determine whether the switched mode power supply 1 is enabled or disabled.

The main benefit of enabling and disabling the switched mode power supply 1 in this way is that this allows the switched mode power supply 1 to be operated at input voltage levels that remain relatively low. The switched mode power supply 1 converts more efficient at such lower voltage level than at e.g. the peak of a mains voltage level. The switched mode power supply 1 is a buck converter that convert the rectified input voltage to a lower voltage than the regulated output voltage. The load may then receive this low voltage. The output voltage may lie in between 1V and 10 V and more preferably between 1 V and 5 V. The controller 2 may be part of the load and may require a low voltage such as 3.3 V or 5 V.
Preferably, the switched mode power supply 1 is of the type of a self-oscillating. This type of switched mode power supply 1 responds faster to an enable and disable signal than for example an IC based switched mode power supply. The load may be any kind of load that preferably requires a low voltage and/or low power.

The power supply may have a second sensor 5 that may be used to sense the regulated output voltage. The second sensor 5 may have a first resistor R3 and a second resistor R4 to divide down the voltage so as to create a second control signal. Since the regulated output voltage may be relatively low, a voltage divider may not be required, and the second sensor 5 may directly sense the regulated output voltage and directly forward this as the second control signal. The second control signal may be provided to the controller 2. The controller 2 may use this second control signal as a feedback signal for controlling the regulated output voltage. The controller may additionally or alternatively use the second control signal to determine if a power requirement of the load has changed. When a load draws suddenly more or less power, this will impact the regulated voltage for a very short time. If the load requires more power and therefore draws a larger current, the regulated output voltage may have a very short voltage drop until the controller 2 has regulated the output voltage back to its desired level. If the load requires less power and therefore draws a smaller current, the regulated output voltage may have a very short voltage spike until the controller 2 has regulated the output voltage back to its desired level. This voltage drop or voltage spike may be detected by the second sensor 5. The controller 2 may then receive the detection of the voltage drop or voltage spike and respond to it correspondingly.

For example, when the controller 2 detects a voltage drop, the controller 2 may increase the threshold level to allow the switched mode power supply 1 to provide power during a longer time duration. The increased threshold level allows the controller 2 to enable the switched mode power supply 1 during a longer time period, i.e., until the AC input voltage reaches a larger voltage level. The switched mode power supply 1 may then provide more power during a mains cycle, allowing more power to be provided to the load.

For example, when the controller 2 detects a voltage spike, the controller 2 may decrease the threshold level to allow the switched mode power supply 1 to provide power during a shorter time duration. The decreased threshold level allows the controller 2 to enable the switched mode power supply 1 during a shorter time period, i.e., until the AC input voltage reaches a lower voltage level. The switched mode power supply 1 may then provide less power during a mains cycle, allowing less power to be provided to the load.

Alternatively or additionally, the switched mode power supply 1 or the load may provide the required load power to the controller 2 as a feedback signal so that the controller can directly respond to a change in the required load power.

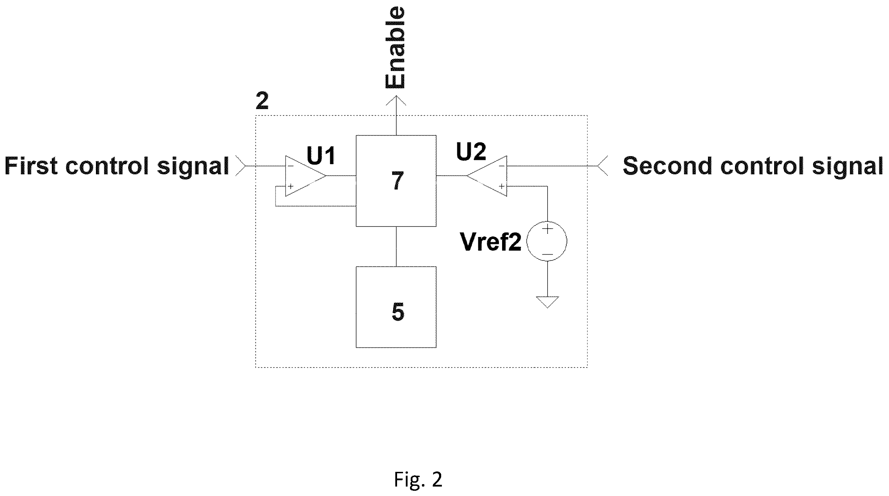

Figure 2 shows an example of the controller 2. The controller receives the first control signal as mentioned before. Optionally, the controller 2 may receive the second control signal as mentioned above. The controller 2 may have a signal generator 7 that provides the enable signal that is used to enable and disable the switched mode power supply. The signal generator 7 may generate the threshold level and provide it to a comparator U1. The comparator U1 compares the first control signal with the threshold level. In this example, when the first control signal is larger than the threshold level, the comparator will provide a low output signal. This low output signal may be an indication for the signal generator 7 that the AC input voltage is larger than a predefined value. The signal generator 7 may then disable the switched mode power supply 1. In this example, when the first control signal is lower than the threshold level, the comparator will provide a high output signal. This high output signal may be an indication for the signal generator 7 that the AC input voltage is lower than a predefined value. The signal generator 7 may then enable the switched mode power supply 1. It is clearly understood that for this example, the inputs to the comparator U1 can be switched so that the result of the comparison is inverter compared to the previous example.

Another comparator U2 may be used to compare the second control signal with a reference voltage Vref2. When the second control signal is larger the reference voltage Vref2, the comparator may provide a low output signal, indicating that the regulated output voltage to the load exceeds a predefined value. The comparator may for example be used in a feedback loop for the switched mode power supply 1 to regulate the regulated output voltage properly.

Alternatively or additionally, the comparator U2 may be used to determine if the regulated output voltage has a voltage spike or dip, indicating a change in the power requirement of the load. This may provide information for the signal generator 7 to increase or decrease the threshold level. The signal generator 7 is then capable of adjusting the threshold level based on the power required by the load i.e. the voltage behavior of the regulated output voltage.

The signal generator 7 may also receive an additional input signal from a communication module 5. Preferably, the communication module 5 is a wireless communication module. The wireless communication module 5 may use any commonly known protocol such as for example ZigBee, WiFi, Bluetooth or LiFi (Light Fidelity). The wireless communication module 5 may provide extra control commands to the signal generator 7 such as for example a stand-by signal. When a stand-by signal is provided to the signal generator 7, the power supply may only need to provide a small amount of power to remain operating in stand-by. The signal generator 7 may then decide to reduce the threshold level. When an activating signal is provided to the signal generator 7, the power supply may need to provide a relatively large amount of power to remain operating in the activated mode. The signal generator 7 may then decide to increase the threshold level. This way of changing the threshold level may be done as an alternative or together with the threshold level control based on the comparison of the second control signal with the reference voltage Vref2.

A major benefit of changing the threshold level by increasing or decreasing the threshold level is that the switched mode power supply 1 can operate closer to a single operating point. Instead of adapting e.g. the operating frequency or current amplitude for regulating the regulated output voltage, the duration of the switched mode power supply 1 being active can be used as a control parameter. The frequency and/or current regulation then may not need to have a large operating range and can preferably even be kept constant.

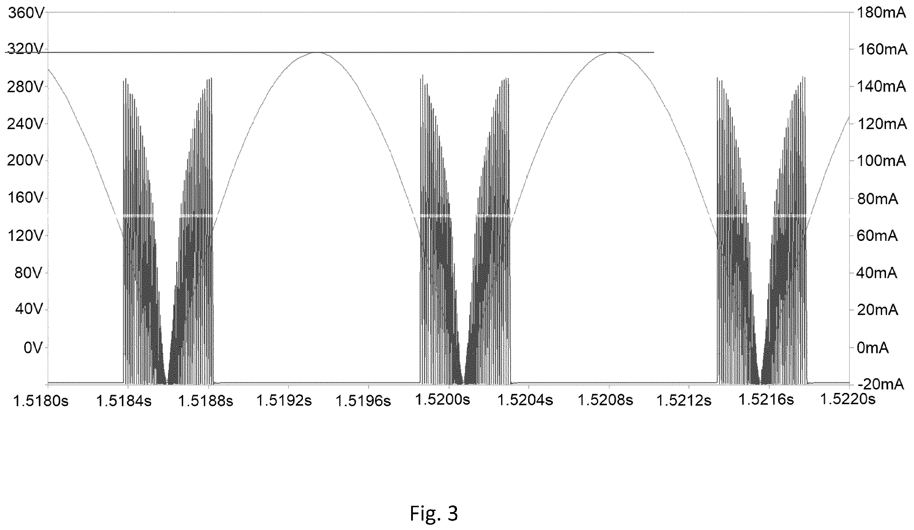

Figure 3 shows an example of a mains period cycle. The mains period cycle is represented as a rectified sinusoidal voltage waveform. Figure 3 also shows the current flowing through the load. This current is provided by the switched mode power supply 1. It can be clearly seen that the switched mode power supply 1 is only operational at a mains voltage close to zero. The mains voltage has a peak voltage of approximately 320 V, which corresponds to a root means square voltage of 230 V. In this example, the threshold level is set to a level such that it represents an AC input voltage amplitude of approximately 140 V. In this example, the threshold is symmetrically present before and after the zero crossing of the AC input voltage. It is to be understood that the threshold levels may differ from each other, such that e.g. the switched mode power supply 1 operates from the zero crossing of the AC input voltage until the threshold level, in this example representing an AC input voltage of approximately 140 V.

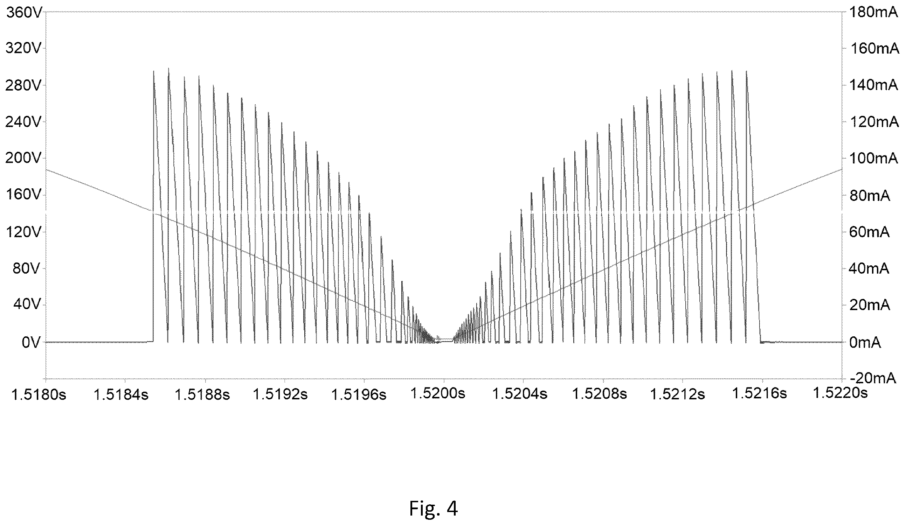

Figure 4 shows a zoomed in part of the mains period of Figure 3. The zoom in area is focused on the zero-crossing of the AC input voltage. The switching of the switched mode power supply 1 can be seen in more detail.

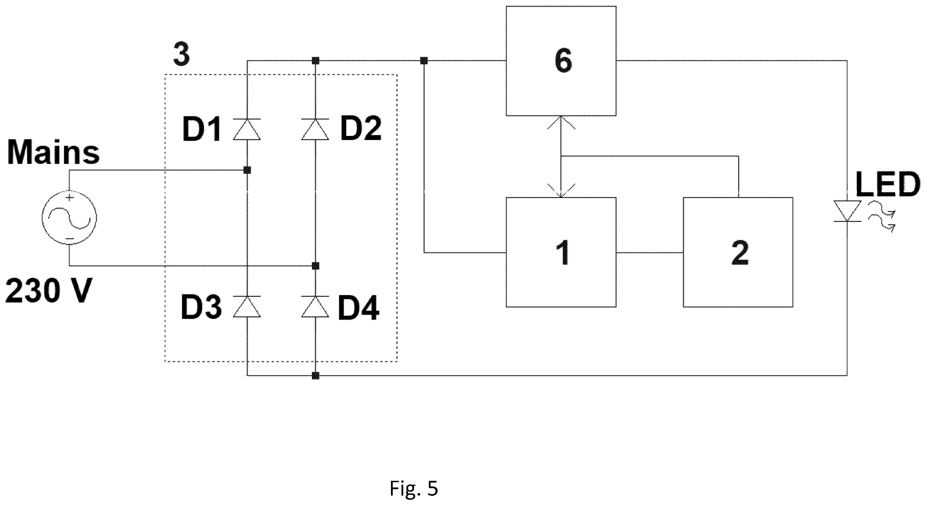

Figure 5 shows a simplified example of a system comprising the power supply. Preferably, the system is a luminating apparatus. The luminating apparatus may have the power supply as defined above.

The luminating apparatus has a rectifier 3 that rectifies the AC input voltage and provides a rectified voltage to the switched mode power supply 1 and a further power supply 6. The further power supply 6 may be used to provide power to a further load LED, which in this example is an LED lighting load LED. The LED lighting load LED may be used to provide general illumination. The further power supply 6 may have the same composition as has been described in the previously mentioned examples. The switched mode power supply 1 provides power to the load. In this example, the controller 2 is part of the load. The switched mode power supply 1 may also provide additional power for a further controller that is used for controlling the further power supply 6. The controller 2 and the further controller can also be integrated into a single controller unit, where the switched mode power supply 1 provides power to the single controller unit. In this example, the controller 2 is also used to control the further power supply 6. The controller 2 may have the wireless communication module 5 as defined in previous examples. This wireless communication module 5 may be used to receive a signal that would allow the luminating apparatus to enter a stand-by mode or an operating mode. When the luminating apparatus is set the stand-by mode, the further power supply 6 may be completely turned off and requires no or significantly less power compared to the operating mode. The controller 2 may then also need less power for powering the power supply and the further power supply 6. This may allow the signal generator 7 to reduce the threshold level so that the switched mode power supply 1 in the power supply provides less power to the load, in this example comprising at least the controller 2. As defined before, the signal generator 7 may perform this threshold level reduction based on a sensed voltage spike in the regulated output voltage to the controller 2 or by receiving the stand-by signal from the wireless communication module 5.

The wireless communication module 5 may also receive an operating signal. This will set the luminating apparatus in the operating mode. During the operating mode, the further power supply 6 provides a controlled amount of power to the LED lighting load LED. In this situation, the controller 2 may need more power than in the stand-by mode. Compared to the stand-by mode, the signal generator 7 may increase the threshold level to allow the switched mode power supply 1 to provide power for a longer time duration.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A power supply comprising:
a rectifier (3) for receiving an alternating current, AC, input voltage and for providing a rectified voltage;
a switched mode power supply (1) adapted to receive the rectified voltage and to provide a regulated output voltage to a load;
a first sensor (4) for sensing the rectified voltage and to provide a first control signal;
a controller (2) for controlling the switched mode power supply (1),
wherein the controller (2) is arranged to enable and disable the switched mode power supply (1);
**characterised in that**
- the controller (2) is arranged to enable the switched mode power supply (1) when the first control signal is below a threshold level and disable the switched mode power supply (1) when the first control signal is above the threshold level,
- -the switched mode power supply (1) is a buck converter or a flyback converter.

2. The power supply according to claim 1, wherein the switched mode power supply (1) is a self-oscillating switched mode power supply.

3. The power supply according to any of the preceding claims, wherein the switched mode power supply (1) comprises a second sensor for sensing the regulated output voltage and to generate a second control signal, wherein the controller (2) is arranged for receiving the second control signal.

4. The power supply according to any of the preceding claims, wherein the threshold level is based on a power required by the load, wherein the controller (2) is arranged to:
increase the threshold level based on an increase of the power required by the load, and decrease the threshold level based on a decrease of the power required by the load.

5. The power supply according to claim 3, wherein the controller (2) is arranged to:
detect a change in the regulated output voltage;
increase the threshold level based on a decrease of the regulated output voltage, and
decrease the threshold level based on an increase of the regulated output voltage.

6. The power supply according to any of the preceding claims, wherein the controller (2) is part of the load.

7. A luminating apparatus comprising:
the power supply according to any of the preceding claims;
a further power supply (6) for providing power to a further load (LED),
the load, and
the further load (LED).

8. The luminating apparatus according to claim 7, wherein the further load (LED) is a lighting load.

9. The luminating apparatus according to claim 8, wherein the lighting load (LED) comprises a light emitting diode, LED.

10. The luminating apparatus according to any of the claims 7 to 9, wherein the controller (2) comprises a wireless communication module (5) arranged to receive a wireless signal, wherein the controller (2) is arranged to enable or disable the further power supply (6) based on the received wireless signal.

11. The luminating apparatus according to any of the claims 7 to 10, wherein the further power supply (6) comprises a further controller.

12. The luminating apparatus according to any of the claims 7 to 10, wherein the controller (2) is arranged to control the switched mode power supply (1) and the further power supply (6).

13. A method for controlling a power supply (1), wherein the switched mode power supply (1) is a buck converter or a flyback converter, the method comprising:
using a rectifier (3) for receiving an alternating current, AC, input voltage and for providing a rectified voltage.
using a first sensor (4) for sensing the rectified voltage and for providing a first control signal;
using a controller (2) for controlling a switched mode power supply (1) for powering a load;
enabling the switched mode power supply (1) when the first control signal is below a threshold level, and
disabling the switched mode power supply (1) when the first control signal is above the threshold level.

14. The method according to claim 13, further comprising:
increasing the threshold level when a power required by the load increases, and
decreasing the threshold level when the power required by the load decreases.

## Patentansprüche

1. Stromversorgung, umfassend:
einen Gleichrichter (3) zum Empfangen einer Wechselstromeingangsspannung, AC-Eingangsspannung, und zum Bereitstellen einer gleichgerichteten Spannung;
ein Schaltnetzteil (1), das geeignet ist, um die gleichgerichtete Spannung zu empfangen und einem Verbraucher eine geregelte Ausgangsspannung bereitzustellen;
einen ersten Sensor (4) zum Erfassen der gleichgerichteten Spannung und um ein erstes Steuersignal bereitzustellen;
eine Steuervorrichtung (2) zum Steuern des Schaltnetzteils (1),
wobei die Steuervorrichtung (2) eingerichtet ist, um das Schaltnetzteil (1) zu aktivieren und zu deaktivieren;
**dadurch gekennzeichnet, dass**
- die Steuervorrichtung (2) eingerichtet ist, um das Schaltnetzteil (1) zu aktivieren, wenn das erste Steuersignal unter einem Schwellenpegel liegt, und das Schaltnetzteil (1) zu deaktivieren, wenn das erste Steuersignal über dem Schwellenpegel liegt,
- das Schaltnetzteil (1) ein Abwärtswandler oder ein Sperrwandler ist.

2. Stromversorgung nach Anspruch 1, wobei das Schaltnetzteil (1) ein selbstoszillierendes Schaltnetzteil ist.

3. Stromversorgung nach einem der vorstehenden Ansprüche, wobei das Schaltnetzteil (1) einen zweiten Sensor zum Erfassen der geregelten Ausgangsspannung und um ein zweites Steuersignal zu erzeugen, umfasst, wobei die Steuervorrichtung (2) zum Empfangen des zweiten Steuersignals eingerichtet ist.

4. Stromversorgung nach einem der vorstehenden Ansprüche, wobei der Schwellenpegel auf einem Strom, der durch den Verbraucher benötigt wird, basiert, wobei die Steuervorrichtung (2) eingerichtet ist zum:
Steigern des Schwellenpegels basierend auf einer Steigerung des Stroms, der durch den Verbraucher benötigt wird, und Verringern des Schwellenpegels basierend auf einer Verringerung des Stroms, der durch den Verbraucher benötigt wird.

5. Stromversorgung nach Anspruch 3, wobei die Steuervorrichtung (2) eingerichtet ist zum:
Detektieren einer Änderung der geregelten Ausgangsspannung;
Steigern des Schwellenpegels basierend auf einer Verringerung der geregelten Ausgangsspannung, und
Verringern des Schwellenpegels basierend auf einer Steigerung der geregelten Ausgangsspannung.

6. Stromversorgung nach einem der vorstehenden Ansprüche, wobei die Steuervorrichtung (2) Teil des Verbrauchers ist.

7. Erleuchtungseinrichtung, umfassend:
die Stromversorgung nach einem der vorstehenden Ansprüche;
eine weitere Stromversorgung (6) zum Bereitstellen von Strom einem weiteren Verbraucher (LED),
den Verbraucher, und
den weiteren Verbraucher (LED).

8. Erleuchtungseinrichtung nach Anspruch 7, wobei der weitere Verbraucher (LED) ein Beleuchtungsverbraucher ist.

9. Erleuchtungseinrichtung nach Anspruch 8, wobei der Beleuchtungsverbraucher (LED) eine Leuchtdiode, LED, umfasst.

10. Erleuchtungseinrichtung nach einem der Ansprüche 7 bis 9, wobei die Steuervorrichtung (2) ein Drahtloskommunikationsmodul (5), das eingerichtet ist, um ein Drahtlossignal zu empfangen, umfasst, wobei die Steuervorrichtung (2) eingerichtet ist, um die weitere Stromversorgung (6) basierend auf dem empfangenen Drahtlossignal zu aktivieren oder zu deaktivieren.

11. Erleuchtungseinrichtung nach einem der Ansprüche 7 bis 10, wobei die weitere Stromversorgung (6) eine weitere Steuervorrichtung umfasst.

12. Erleuchtungseinrichtung nach einem der Ansprüche 7 bis 10, wobei die Steuervorrichtung (2) eingerichtet ist, um das Schaltnetzteil (1) und die weitere Stromversorgung (6) zu steuern.

13. Verfahren zum Steuern einer Stromversorgung (1), wobei das Schaltnetzteil (1) ein Abwärtswandler oder ein Sperrwandler ist, das Verfahren umfassend:
Verwenden eines Gleichrichters (3) zum Empfangen einer Wechselstromeingangsspannung, AC-Eingangsspannung, und zum Bereitstellen einer gleichgerichteten Spannung.
Verwenden eines ersten Sensors (4) zum Erfassen der gleichgerichteten Spannung und zum Bereitstellen eines ersten Steuersignals;
Verwenden einer Steuervorrichtung (2) zum Steuern eines Schaltnetzteils (1) zum Stromversorgen eines Verbrauchers;
Aktivieren des Schaltnetzteils (1), wenn das erste Steuersignal unter einem Schwellenpegel liegt, und
Deaktivieren des Schaltnetzteils (1), wenn das erste Steuersignal über dem Schwellenpegel liegt.

14. Verfahren nach Anspruch 13, ferner umfassend:
Steigern des Schwellenpegels, wenn ein Strom, der durch den Verbraucher benötigt wird, steigt, und
Verringern des Schwellenpegels, wenn der Strom, der durch den Verbraucher benötigt wird, geringer wird.

## Revendications

1. Alimentation électrique comprenant :
un redresseur (3) pour recevoir une tension d'entrée de courant alternatif, CA, et pour fournir une tension redressée ;
une alimentation électrique en mode commuté (1) conçue pour recevoir la tension redressée et pour fournir une tension de sortie régulée à une charge ;
un premier capteur (4) pour détecter la tension redressée et fournir un premier signal de commande ;
un dispositif de commande (2) pour commander l'alimentation électrique en mode commuté (1),
dans laquelle le dispositif de commande (2) est conçu pour activer et désactiver l'alimentation électrique en mode commuté (1) ;
**caractérisée en ce que**
- le dispositif de commande (2) est conçu pour activer l'alimentation électrique en mode commuté (1) lorsque le premier signal de commande est inférieur à un niveau seuil et pour désactiver l'alimentation électrique en mode commuté (1) lorsque le premier signal de commande est supérieur au niveau seuil,
- l'alimentation électrique en mode commuté (1) est un convertisseur abaisseur de tension ou un convertisseur à transfert indirect.

2. Alimentation électrique selon la revendication 1, dans laquelle l'alimentation électrique en mode commuté (1) est une alimentation électrique en mode commuté auto-oscillante.

3. Alimentation électrique selon l'une quelconque des revendications précédentes, dans laquelle l'alimentation électrique en mode commuté (1) comprend un second capteur pour détecter la tension de sortie régulée et générer un second signal de commande, dans laquelle le dispositif de commande (2) est conçu pour recevoir le second signal de commande.

4. Alimentation électrique selon l'une quelconque des revendications précédentes, dans laquelle le niveau seuil est basé sur une puissance requise par la charge, dans laquelle le dispositif de commande (2) est conçu pour :
augmenter le niveau seuil sur la base d'une augmentation de la puissance requise par la charge, et diminuer le niveau seuil sur la base d'une diminution de la puissance requise par la charge.

5. Alimentation électrique selon la revendication 3, dans laquelle le dispositif de commande (2) est conçu pour :
détecter un changement dans la tension de sortie régulée ;
augmenter le niveau seuil sur la base d'une diminution de la tension de sortie régulée, et
diminuer le niveau seuil sur la base d'une augmentation de la tension de sortie régulée.

6. Alimentation électrique selon l'une quelconque des revendications précédentes, dans laquelle le dispositif de commande (2) fait partie de la charge.

7. Appareil d'éclairage comprenant :
l'alimentation électrique selon l'une quelconque des revendications précédentes ;
une alimentation électrique supplémentaire (6) pour alimenter une charge supplémentaire (DEL),
la charge, et
la charge supplémentaire (DEL).

8. Appareil d'éclairage selon la revendication 7, dans lequel la charge supplémentaire (DEL) est une charge d'éclairage.

9. Appareil d'éclairage selon la revendication 8, dans lequel la charge d'éclairage (DEL) comprend une diode électroluminescente, DEL.

10. Appareil d'éclairage selon l'une quelconque des revendications 7 à 9, dans lequel le dispositif de commande (2) comprend un module de communication sans fil (5) conçu pour recevoir un signal sans fil, dans lequel le dispositif de commande (2) est conçu pour activer ou désactiver l'alimentation électrique supplémentaire (6) sur la base du signal sans fil reçu.

11. Appareil d'éclairage selon l'une quelconque des revendications 7 à 10, dans lequel l'alimentation électrique supplémentaire (6) comprend un dispositif de commande supplémentaire.

12. Appareil d'éclairage selon l'une quelconque des revendications 7 à 10, dans lequel le dispositif de commande (2) est conçu pour commander l'alimentation électrique en mode commuté (1) et l'alimentation électrique supplémentaire (6).

13. Procédé permettant de commander une alimentation électrique (1), dans lequel l'alimentation électrique en mode commuté (1) est un convertisseur abaisseur de tension ou un convertisseur à transfert indirect, le procédé comprenant :
l'utilisation d'un redresseur (3) pour recevoir une tension d'entrée de courant alternatif, CA, et pour fournir une tension redressée.
l'utilisation d'un premier capteur (4) pour détecter la tension redressée et pour fournir un premier signal de commande ;
l'utilisation d'un dispositif de commande (2) pour commander une alimentation électrique en mode commuté (1) pour alimenter une charge ;
l'activation de l'alimentation électrique en mode commuté (1) lorsque le premier signal de commande est inférieur à un niveau seuil, et
la désactivation de l'alimentation électrique en mode commuté (1) lorsque le premier signal de commande est supérieur au niveau seuil.

14. Procédé selon la revendication 13, comprenant en outre :
l'augmentation du niveau seuil lorsqu'une puissance requise par la charge augmente, et
la diminution du niveau seuil lorsque la puissance requise par la charge diminue.
